# EUROPÄISCHE PATENTSCHRIFT

(11) **EP 0 941 504 B1**
(45) Veröffentlichungstag und Bekanntmachung des Hinweises auf die Patenterteilung: **28.03.2001**
(21) Anmeldenummer: 97949948.0
(22) Anmeldetag: 18.11.1997
(51) Int. Cl.: G05B 13/02, B22D 11/16

(54) **VERFAHREN ZUR PARAMETRIERUNG EINES ZUM VERGLEICH EINES MESSSIGNALS MIT EINEM MUSTERSIGNAL DIENENDEN FUZZY-AUTOMATEN**
PROCESS FOR PARAMETERING A FUZZY AUTOMATON THAT COMPARES A MEASUREMENT SYSTEM TO A PATTERN SIGNAL
PROCEDE POUR PARAMETRER UN AUTOMATE A LOGIQUE FLOUE QUI COMPARE UN SIGNAL DE MESURE A UN SIGNAL MODELE

(30) Priorität: 28.11.1996 DE 19649438
(43) Veröffentlichungstag der Anmeldung: 15.09.1999
(73) Patentinhaber: SIEMENS AKTIENGESELLSCHAFT, 80333 München (DE)
(72) Erfinder: ADAMY, Jürgen, D-91338 Igensdorf (DE); FREITAG, Joachim, D-97199 Hopferstadt (DE); LORENZ, Steffen, D-98701 Grossbreitenbach (DE)
(86) Internationale Anmeldenummer: DE9702703
(87) Internationale Veröffentlichungsnummer: WO9824009

(56) Entgegenhaltungen:
- EP-A- 0 753 802
- WO-A-96/31304
- DE-A- 4 442 087
- JP-A- 4 172 160
- KAZUNARI HATANAKA ET AL: "BREAKOUT FORECASTING SYSTEM BASED ON MULTIPLE NEURAL NETWORKS FOR CONTINUOUS CASTING IN STEEL PRODUCTION" FUJITSU-SCIENTIFIC AND TECHNICAL JOURNAL, Bd. 29, Nr. 3, 21.September 1993, KAWASAKI, JP, Seiten 265-270, XP000411504

## Beschreibung

Aus der WO 96/31 304 ist eine Einrichtung zur Durchbruch-Früherkennung bei Stranggußanlagen bekannt. Zur Durchbruch-Früherkennung wird die Oberflächentemperatur des Gußstrangs mit Hilfe von Temperatursensoren, die in einer Kokille um den Strang herum verteilt angeordnet sind, erfaßt und anschließend ausgewertet. Jedem der Temperatursensoren ist hierzu eine Mustererkennungseinrichtung zugeordnet, die aus der erfaßten Temperatur und einer den bisherigen Temperaturverlauf repräsentierenden inneren Zustandsgröße auf der Grundlage von Fuzzy-Folgerungen die innere Zustandsgröße aktualisiert und ausgangsseitig einen aktuellen Vorhersagewert für die Durchbruch-Wahrscheinlichkeit erzeugt. In der Mustererkennungseinrichtung ist auf Fuzzy-Logik basierend ein Fuzzy-Regelwerk implementiert. Dabei sind in dem Fuzzy-Regelwerk tabellenartig Regeln aufgeführt, welche auf linguistischen Werten der Eingangsvariablen, wie beispielsweise der Temperatur beruhen. Mittels der Regeln ist festgelegt, unter welchen Voraussetzungen die Mustererkennungseinrichtung den inneren Zustand, d.h. den Bearbeitungszustand des Fuzzy-Regelwerks und somit den aktuellen Vorhersagewert für die Durchbruch-Wahrscheinlichkeit verändert bzw. beibehält.

Nachteil der bekannten Mustererkennungseinrichtung ist es, daß die Erstellung der in der Fuzzy-Logik implementierten Fuzzy-Regeln, durch einen Fachmann "von Hand" vorgenommen werden muß. Da für jeden Bearbeitungszustand des Fuzzy-Regelwerks jeweils ein vollständiges "Set" an Regeln zu entwerfen ist, gestaltet sich somit das Parametrieren der Fuzzy-Logik der bekannten Mustererkennungseinrichtung umständlich und zeitaufwendig.

Des weiteren nachteilig ist es, daß eine derart mit Regeln parametrierte Fuzzy-Logik der Mustererkennungseinrichtung lediglich in der Lage ist, ein bestimmtes Muster zu erkennen. Soll die Mustererkennungseinrichtung ein neues, anderes Muster erkennen, beispielsweise nach einer Umstellung der Stranggußanlage, so müssen wiederum händisch durch einen Fachmann und auf dessen Fachwissen basierend neue Regeln zur Parametrierung der Fuzzy-Logik entworfen werden.

Der Erfindung liegt nun die Aufgabe zugrunde, ein Verfahren zur Parametrierung eines zum Vergleich eines Meßsignals mit einem Mustersignal dienenden Fuzzy-Automaten mittels eines programmgesteuerten Rechenwerks anzugeben.

Die Aufgabe wird gelöst, mit dem im Anspruch 1 angegebenen Verfahren, sowie der in Anspruch 10 angegebenen Verwendung des Verfahrens bei einer Einrichtung zur Durchbruch-Früherkennung bei Stranggußanlagen.

Die erfindungsgemäße Lösung der Parametrierung eines Fuzzy-Automaten hat den Vorteil, daß dessen Parametrierung in Form der Erstellung von Transformationsvorschriften durch das Rechenwerk vollautomatisch erfolgen kann. Dem Rechenwerk muß das zu erkennende Mustersignal bzw. die zu erkennenden Mustersignale vorgegeben werden, damit eine Parametrierung erfolgen kann.

Die erfindungsgemäße Parametrierung des Fuzzy-Automaten weist insbesondere den Vorteil auf, daß bei häufiger wechselnden Mustersignalen eine schnelle, unkomplizierte und flexible Umparametrierung des Fuzzy-Automaten erfolgen kann. Das "Aufzeichnen" eines Mustersignals im Fuzzy-Automaten kann somit auch ohne spezielles Fachwissen vorgenommen werden.

Weitere vorteilhafte Ausführungsformen der Erfindung sind in den entsprechenden Unteransprüchen angegeben.

Die Erfindung wird des weiteren anhand der in den nachfolgend kurz ausgeführten Figuren dargestellten Ausführungsbeispiele weiter erläutert. Dabei zeigt:
- FIG 1: beispielhaft einen prinzipiellen Aufbau eines Fuzzy-Automaten,
- FIG 2: beispielhaft einen Fuzzy-Automaten zum Vergleich eines Meßsignals mit einem Mustersignal,
- FIG 3: beispielhaft einen Zustandsgraphen der Fuzzy-Bearbeitungszustände eines Fuzzy-Automaten,
- FIG 4: ein Beispiel für den Signalverlauf eines Signals f und dessen Ableitung f', wobei die gestrichelt dargestellten Bereiche ausgewählte Punkte der Signalverläufe kennzeichnen,
- FIG 5: beispielhaft den Eingangswertebereich des Fuzzy-Automaten, wobei die in Figur 4 dargestellten Signalverläufe f und f' das trajektorienförmige Mustersignal T bilden,
- FIG 6: die Darstellung des Eingangswertebereichs aus Figur 5 mit grau dargestellten Merkmalsbereichen, und
- FIG 7a-7h: beispielhaft Karnaugh-Darstellungen der erfindungsgemäß durch das Rechenwerk festgelegten Transformationsvorschriften der einzelnen Bearbeitungszustände des Fuzzy-Automaten.

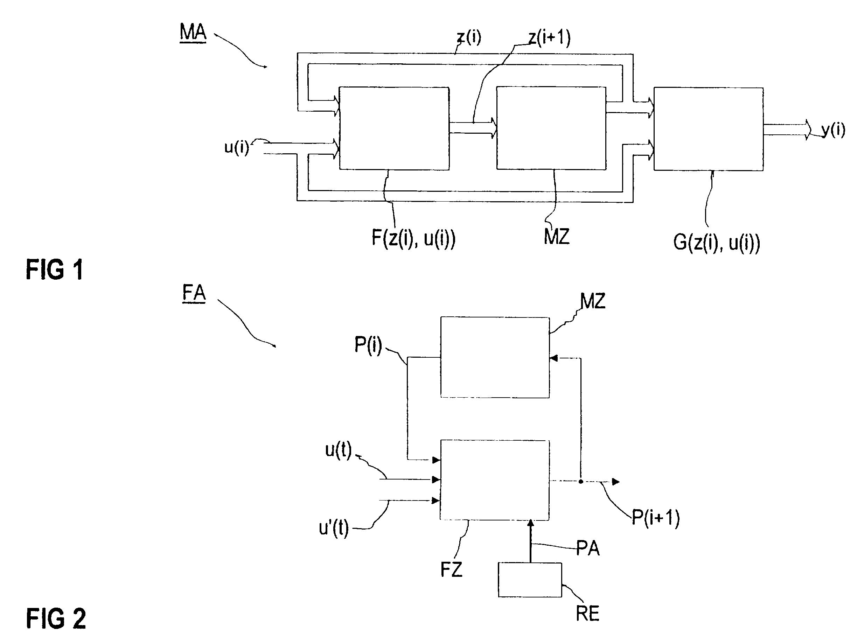

Figur 1 zeigt beispielhaft einen prinzipiellen Aufbau MA eines Fuzzy-Automaten mit einem Eingangsvektor u(i). Eine erste Fuzzy-Logik F(z(i), u(i)) erzeugt aus dem Eingangsvektor u(i) und einem zwischengespeicherten inneren Zustandsvektor z(i) einen aktualisierten Zustandsvektor z(i+1), der in einem Speicherglied MZ zwischengespeichert wird. Der zwischengespeicherte Zustandsvektor z(i) und der Eingangsvektor u(i) werden in einer zweiten Fuzzy-Logik G(z(i), u(i)) zu einem Ausgangsvektor y (i) miteinander verknüpft.

In der Figur 2 ist beispielhaft ein Fuzzy-Automat FA mit einer Fuzzy-Logik FZ dargestellt. Dieser entspricht dem in der Figur 1 dargestellten prinzipiellen Aufbau MA eines Fuzzy-Automaten FA, wobei die erste Fuzzy-Logik F(z(i), u(i)) und die zweite Fuzzy-Logik G(z(i), u(i)) ein übereinstimmendes Übertragungsverhalten aufweisen, d.h. FZ = F(z(i), u(i)) = G(z(i), u(i)). Des weiteren besteht der Eingangsvektor u(i) im Beispiel der Figur 2 aus den Eingangsgrößen eines ersten Signals u(t) und eines zweiten Signals u'(t), welches beispielsweise die Ableitung des ersten Signals u(t) nach der Zeit ist. Im Beispiel der Figur 2 weist der Fuzzy-Automat FA nur eine einzige Ausgangsgröße y(i) = P(i+1) auf, welche über ein Speicherglied MZ zwischengespeichert und als innerer Zustandsvektor P(i) auf den Eingang der Fuzzy-Logik FZ rückgekoppelt ist. Der zwischengespeicherte, innere Zustandsvektor P(i) entspricht dabei der Erkennungswahrscheinlichkeit, daß bereits ein bestimmter Signalverlauf der Eingangsgrößen u(t) und u'(t) vorliegt. Dies wird erfindungsgemäß durch eine entsprechende Parametrierung PA der Fuzzy-Logik FZ mittels eines programmgesteuerten Rechenwerks RE bewirkt.

Der Fuzzy-Automat FA und das programmgesteuerte Rechenwerk RE können sowohl als Hardware oder als Software realisiert sein. Der Fuzzy-Automat FA und das Rechenwerk RE können dabei insbesondere als getrennte Einheiten, aber vorzugsweise auch in einer einzigen Vorrichtung realisiert sein, beispielsweise durch zwei auf einem Computer installierte Computerprogramme.

Bei dem in der Figur 2 dargestellten Fuzzy-Automaten FA handelt es sich bevorzugt um einen Fuzzy-Automaten vom Typ "Sugeno". Die Fuzzy-Logik FZ weist dabei insbesondere eine Fuzzyfizierung der Eingangsgrößen auf, welche über ein Regelwerk und insbesondere eine anschließende Defuzzyfizierung als Erkennungsgrad P(i+1) ausgegeben wird. Bevorzugt erfolgt die Inferenz nach der Max-Min-Methode und die Defuzzyfizierung nach der Schwerpunktmethode für Singletons. Der Erkennungsgrad P(i+1) ist ein Maß für die Wahrscheinlichkeit, daß ein bestimmter, durch die Parametrierung PA festgelegter Signalverlauf der Eingangsgrößen u(t) und u'(t) vorliegt. Durch die Zwischenspeicherung und Rückkopplung des in dem jeweils vorangegangen Zeitschritt ermittelten inneren Zustandsvektors P(i) kann die Fuzzy-Logik FZ einen Vergleich zwischen den Ist-Werten der Eingangsgrößen u(t) und u'(t) und dem mit der Parametrierung PA festgelegten Verlauf des Mustersignals durchführen.

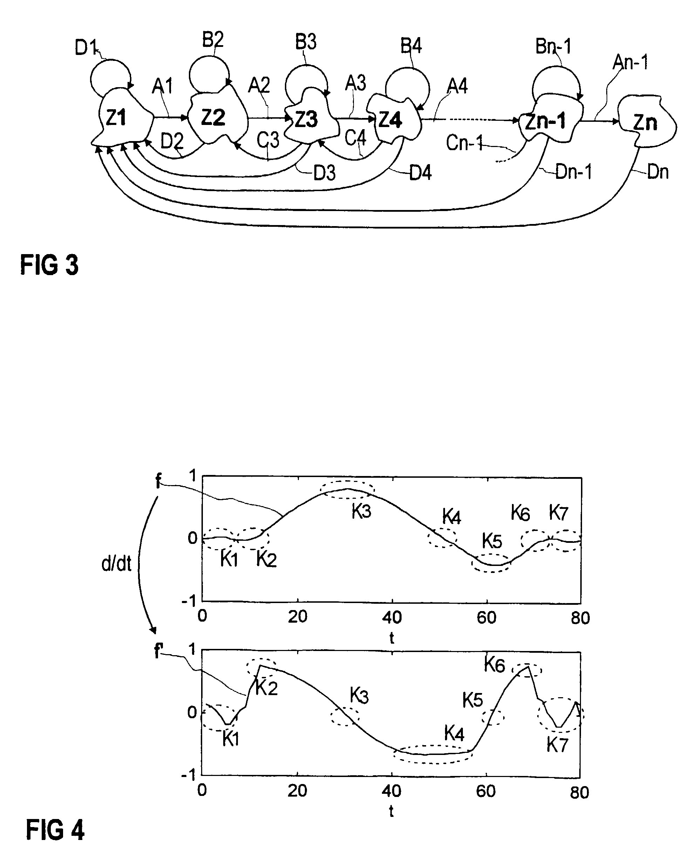

In der Figur 3 ist beispielhaft ein Fuzzy-Zustandsgraph des Fuzzy-Automaten FA dargestellt. Die Knoten des Zustandsgraphen bilden dabei die möglichen Bearbeitungszustände Z1, Z2,.., Zn-1, Zn ab, in denen sich der Fuzzy-Automat FA befinden kann. Je höher der jeweilige Bearbeitungszustand Z1..Zn ist, in dem sich der Fuzzy-Automat FA gerade befindet, desto größer ist die Wahrscheinlichkeit, daß bereits ein bestimmter Signalverlauf der Eingangsgrößen u(t) und u'(t) vorliegt. Dabei werden die Bearbeitungszustände Z1..Zn insbesondere durch sogenannte "linguistische Variablen" der Fuzzy-Logik FZ beschrieben, welche anschließend zur Bildung des Erkennungsgrads P(i+1) dienen. Die Bearbeitungszustände Z1..Zn werden insbesondere als "unscharf" bzw. "fuzzy" bezeichnet, da durch den Fuzzy-Automaten FA im Gegensatz zu binären Automaten mehrere Bearbeitungszustände gleichzeitig mit einem bestimmten Wahrscheinlichkeitsanteil angenommen werden können.

Die Übergangsbedingungen zwischen den einzelnen Bearbeitungszuständen Zl..Zn des Fuzzy-Automaten FA werden durch Transformationsvorschriften beschrieben, welche in der Figur 3 durch Pfeile mit den Bezugszeichen A1..An-1,B2,..,Dn dargestellt sind. Die Transformationsvorschriften legen dabei fest, ob der Fuzzy-Automat FA seinen Bearbeitungszustand beibehält oder wechselt. Die Transformationsvorschriften setzen sich insbesondere zusammen aus Übergangsregeln A1..An-1 bei denen der Fuzzy-Automat FA von einem aktuellen in einen nächsthöheren Bearbeitungszustand übergeht, Halteregeln B2..Bn-1, bei denen der Fuzzy-Automat FA in einem aktuellen Bearbeitungszustand verbleibt, Rücksprungregeln C3..Cn-1, bei denen der Fuzzy-Automat FA von einem aktuellen in einen nächstniedrigeren Bearbeitungszustand zurückspringt, sowie Rücksetzregeln D1..Dn, bei denen der Fuzzy-Automat FA von einem aktuellen in den niedrigsten, d.h. ersten Bearbeitungszustand Z1 zurückspringt.

In der Figur 4 ist ein Beispiel für den Signalverlauf eines Signals f und dessen Ableitung f' über der Zeit angegeben. Die Signale f und f' sind bevorzugt normiert skaliert angegeben und dienen im folgenden Ausführungsbeispiel zur Parametrierung des in der Figur 2 dargestellten Fuzzy-Automaten FA. Dieser dient zum Vergleich zwischen einem Meßsignal, beispielsweise den Ist-Werten der Eingangsgrößen u(t) und u'(t), mit einem Mustersignal. Im Beispiel der Figur 4 wird das Mustersignal durch die dargestellten Signale f und f' gebildet. Das Mustersignal setzt sich nicht notwendigerweise aus einem Grundsignal und dessen erster Ableitung zusammen, sondern kann auch höhere Ableitungen oder weitere Signale aufweisen.

Gemäß der Erfindung wählt das programmgesteuerte Rechenwerk RE Punkte K1..K7 im Verlauf des Mustersignals aus. Die ausgewählten Punkte K1..K7 werden insbesondere auch als Kennzeichen des Mustersignals bezeichnet. Die Punkte können beispielsweise beliebig ausgewählte oder äquidistant dem Verlauf des Mustersignals entnommene Punkte sein. Um einen effizienten und schnellen Signalvergleich durch den Fuzzy-Automaten FA zu ermöglichen, wird somit nicht der vollständige Signalverlauf des Mustersignals für den Vergleich mit einem Meßsignal verwendet. In einer vorteilhaften Ausführungsform der Erfindung bestimmt das Rechenwerk RE die ausgewählten Punkte K1..K7 derartig, daß diese für dessen Verlauf des Mustersignals kennzeichnend sind. Vorteilhaft weisen die ausgewählten Punkte K1..K7 des Signalverlaufs des Mustersignals mathematisch charakteristische Eigenschaften auf. Bevorzugt sind dies Extremwerte, Nullstellen und/oder Wendepunkte. Im Beispiel der Figur 4 sind diejenigen Punkte K1..K7 der das Mustersignal bildenden Signale f und f' ausgewählt, bei denen zu einem Zeitpunkt das Signal f oder dessen Ableitung f' einen Extremwert oder eine Nullstelle aufweisen.

Jedem der in Figur 4 beispielhaft ausgewählten Punkte K1..K7 wird erfindungsgemäß durch das in Figur 2 dargestellte programmgesteuerte Rechenwerk RE ein Bearbeitungszustand Zl..Zn des Fuzzy-Automaten FA zugeordnet, so daß dieser mittels einer dadurch gebildeten Folge der Bearbeitungszustände Zl..Zn ein Maß für die Wahrscheinlichkeit bestimmt, daß ein sich aus den Eingangsgrößen u(t), u'(t) zusammensetzendes Meßsignal einen entsprechenden Verlauf, wie ein sich beispielhaft aus den Eingangsgrößen f, f' zusammensetzendes Mustersignal aufweist. Bezogen auf den in der Figur 3 dargestellten Zustandsgraphen, ordnet das programmgesteuerte Rechenwerk RE jedem der sieben ausgewählten Punkte K1..K7 einen Bearbeitungszustand Z1..Zn des Fuzzy-Automaten FA zu. Vorzugsweise wird dabei von einem ersten Bearbeitungszustand Z1 als Grundzustand ausgegangen. In Bezug auf das Beispiel des sich aus den Signalen f und f' zusammensetzenden Mustersignals der Figur 4 ergeben sich somit acht Bearbeitungszustände Z1..Z8 des Fuzzy-Automaten FA.

Der Fuzzy-Automat FA bewegt sich innerhalb der Folge der Bearbeitungszustände Z1..Z8, welche in der Figur 3 dargestellt sind. Die Bearbeitungszustände Z1..Z8 entsprechen dabei den bereits durch den Fuzzy-Automaten FA erkannten ausgewählten Punkten K1..K7 der Signale f und f'. Je höher dabei ein Bearbeitungszustand Z1..Zn ist, den der Fuzzy-Automat FA annimmt, desto größer ist das Maß der Wahrscheinlichkeit, daß ein zu analysierendes Meßsignal einen entsprechenden Verlauf wie ein in Form der Parametrierung PA des Fuzzy-Automaten FA vorliegendes Mustersignal aufweist. Nimmt der Fuzzy-Automat FA den höchsten Bearbeitungszustand Zn bzw. Z8 an, so hat dieser im zu analysierenden Meßsignal einen dem Mustersignal entsprechenden Verlauf erkannt.

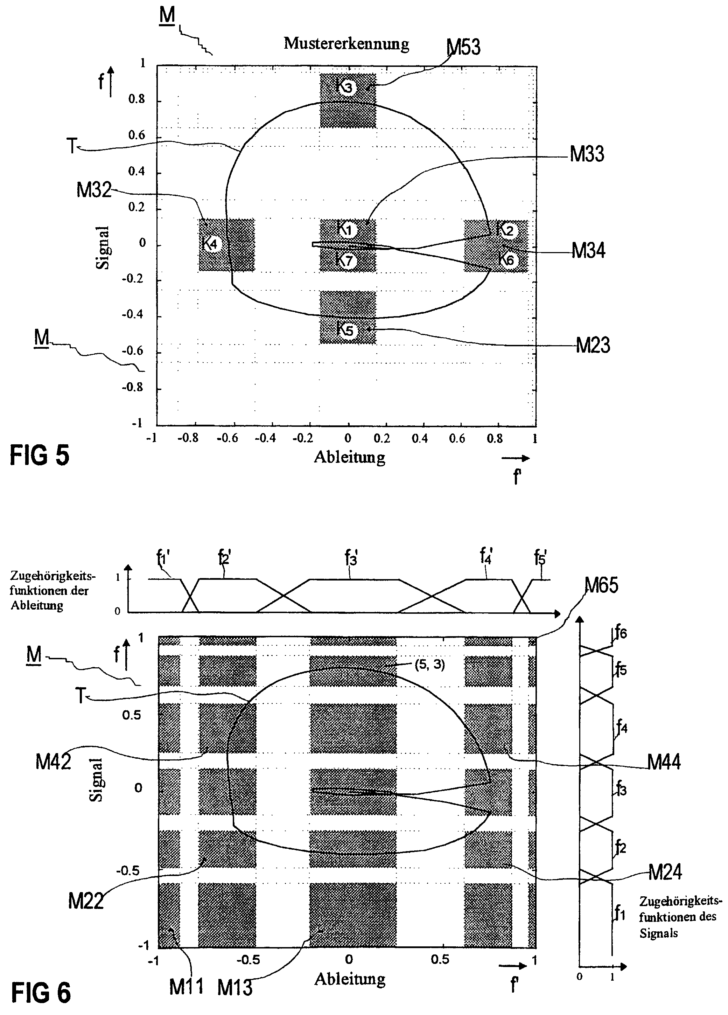

In der Figur 5 sind die in der Figur 4 dargestellten Signale f und f' in Form eines trajektorienförmigen Mustersignals T dargestellt. Erfindungsgemäß wird das Mustersignal T durch das programmgesteuerte Rechenwerk RE in einen Eingangswertebereich M des Fuzzy-Automaten FA abgebildet. Des weiteren werden durch das programmgesteuerte Rechenwerk RE auch die ausgewählten Punkte K1..K7 abgebildet und erfindungsgemäß sogenannte Merkmalsbereiche M34, M53, M32, M23 im Eingangswertebereich M derart generiert, daß in diesen zumindest die ausgewählten Punkte K1..K7 liegen. Im Beispiel der Figur 5 sind die ausgewählten Punkte K1..K7 nicht punktförmig dargestellt, sondern als grau dargestellte Merkmalsbereiche M33, M34, M53, M32, M23 abgegrenzt. In diesem Beispiel weist der Merkmalsbereich M53 dabei auf ein Maximum und der Merkmalsbereich M23 auf ein Minimum des Signals f, bzw. eine Nullstelle des Signals f' hin.

In der Figur 6 ist der normierte Eingangswertebereich M aus der Figur 5 nochmals dargestellt. Bevorzugt werden durch das programmgesteuerte Rechenwerk RE zur besseren Erfassung des Verlaufs des Mustersignals T unter Einbezug der die ausgewählten Punkte K1..K7 abgrenzenden Merkmalsbereiche M33, M34, M53, M32, M23 weitere, grau dargestellte Merkmalsbereiche M11..M65 generiert. Zwischen diesen liegen in der Figur 6 durch Rasterlinien begrenzte, weiß dargestellte Übergangsbereiche, so daß der normierte Eingangswertebereich M vollständig von Merkmalsbereichen M11..M65 und Übergangsbereichen abgedeckt ist. Den Merkmalsbereichen M11..M65 werden durch das programmgesteuerte Rechenwerk RE insbesondere Zugehörigkeitsfunktionen f1..f6, f1'..f5' der in Figur 2 dargestellten Fuzzy-Logik FZ zugeordnet. Dabei stellen die Merkmalsbereiche M11..M65 insbesondere den Kernbereich der Zugehörigkeitsfunktionen f1..f6, f1'..f5' dar, bei dem diese den Wert 1 aufweisen. Die in der Figur 6 dargestellten Rasterlinien liegen jeweils an den Grenzen der Kernbereiche der Zugehörigkeitsfunktionen f1..f6, f1'..f5'. Die einzelnen Zugehörigkeitsfunktionen f1..f6, f1'..f5' gehen in den Randbereichen linear ineinander über, so daß deren Summe insbesondere gerade 1 ergibt. Als linguistische Variablen sind hier beispielhaft die Bezugszeichen f1..f6 und f1'..f5' angegeben, welche im folgenden auch zur Angabe der Koordinaten der Merkmalsbereiche M11..M65 verwendet werden.

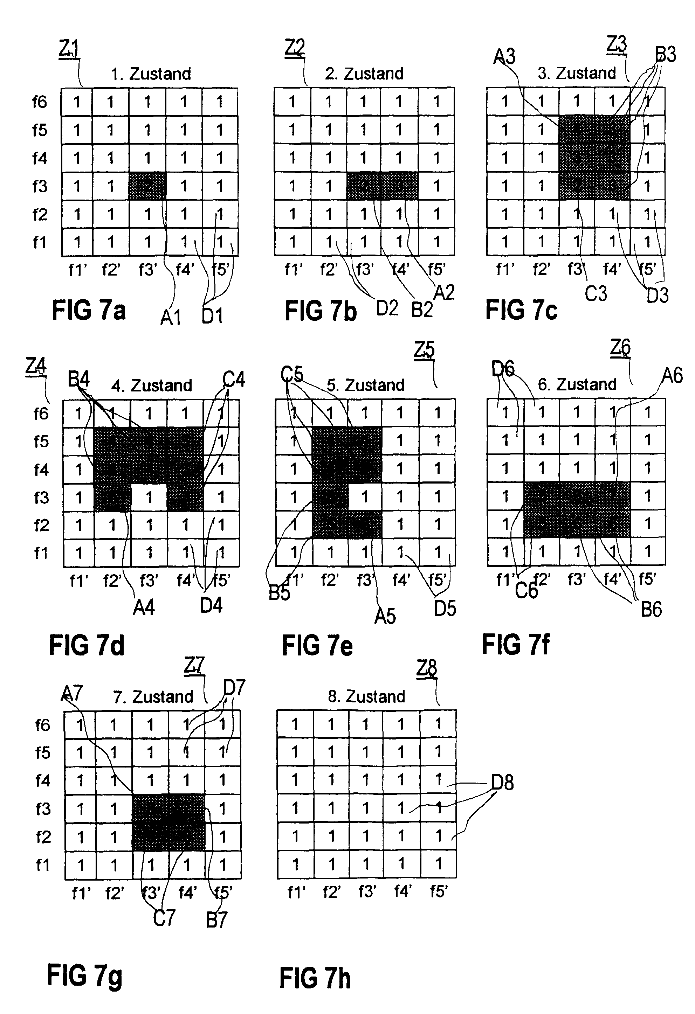

In den Figuren 7a bis 7h sind beispielhaft Diagramme, die den Karnaugh-Diagrammen der bodeschen Logik entsprechen, der erfindungsgemäß durch das programmgesteuerte Rechenwerk RE erstellten Transformationsvorschriften der einzelnen Bearbeitungszustände Z1..Z8 des Fuzzy-Automaten FA dargestellt. Erfindungsgemäß ordnet dabei das programmgesteuerte Rechenwerk RE zur Parametrierung PA des Fuzzy-Automaten FA jedem Bearbeitungszustand Z1..Z8 jeweils für jeden Merkmalsbereich M11..M65 des Eingangswertebereiches M eine Transformationsvorschrift zu, welche in den Figuren 7a bis 7h durch die Bezugszeichen Z1..Z8, f1..f6, f1'..f5', A1..An-1, B2..Bn-1, C3..Cn-1, D1..Dn dargestellt sind. Diese führt der Fuzzy-Automat FA abhängig vom aktuellen Bearbeitungszustand Z1..Zn beim Durchlauf des zu analysierenden Meßsignals u(t) und u'(t) durch einen Merkmalsbereich M11..M65 zum Übergang in einen folgenden Bearbeitungszustand Z1..Z8 aus. Bei dem Übergang des Fuzzy-Automaten FA in einen folgenden Bearbeitungszustand Z1..Z8 wechselt dieser somit vom aktuellen Bearbeitungszustand Z1..Z8 in einen höheren oder niedrigeren Bearbeitungszustand Z1..Z8 oder behält diesen bei.

Mit Bezug auf den beispielhaft in der Figur 3 dargestellten Zustandsgraphen sind in den Figuren 7a bis 7h für jeden Bearbeitungszustand des Fuzzy-Automaten FA die Transformationsvorschriften aufgeführt, welche die Übergangsregeln A1..A7, die Halteregeln B2..B7, die Rücksprungregeln C3..C7, sowie die Rücksetzregeln D1..D8 aufweisen. Die Zahlen in den mit den Koordinaten Z1..Z8, f1..f6, f1'..f5' bezeichneten Kästchen geben dabei den durch die entsprechende Transformationsvorschrift bewirkten folgenden Bearbeitungszustand Z1..Z8 des Fuzzy-Automaten FA wieder.

Erfindungsgemäß erfolgt die Parametrierung PA des Fuzzy-Automaten FA durch das programmgesteuerte Rechenwerk RE, welches ausgehend von einem ersten Bearbeitungszustand Z1 des Fuzzy-Automaten FA entlang des Verlaufs des Mustersignals T die Folge der Merkmalsbereiche M11..M65 bestimmt, die vom Mustersignal T durchlaufen werden. In den Figuren 7a bis 7h sind dabei beispielhaft die Transformationsvorschriften Z1..Z8, f1..f6, f1'..f5' für die jeweiligen Bearbeitungszustände Z1..Z8 des Fuzzy-Automaten FA dargestellt. Insbesondere wählt das programmgesteuerte Rechenwerk RE aus der Gesamtheit der Merkmalsbereiche M11..M65 die Merkmalsbereiche M23, M32, M33, M34, M53 aus, in denen ein ausgewählter Punkt K1..K7 des Mustersignals T liegt. Des weiteren werden der Merkmalsbereich M33 bestimmt, in dem der letzte ausgewählte Punkt K7 des Mustersignals T liegt und die Merkmalsbereiche M22, M24, M42, M44 ausgewählt, in denen kein ausgewählter Punkt K1..K7 des Mustersignals T liegt.

Insbesondere werden alle Transformationsvorschriften der Bearbeitungszustände Z1..Z8 durch das programmgesteuerte Rechenwerk RE durch Rücksetzregeln D1..D8 zunächst so festlegt, daß der Fuzzy-Automat FA in den ersten Bearbeitungszustand Z1 zurückspringt. Dadurch wird später bewirkt, daß der Fuzzy-Automat FA bei Abweichen eines zu analysierenden Meßsignals u(t), u'(t) vom Mustersignal T wieder in den Anfangszustand Z1 zurückgesetzt wird.

Falls in einem entlang des Verlaufs des Mustersignals T bestimmten Merkmalsbereich M11..M65 ein ausgewählter Punkt K1..K7 liegt, wird durch das programmgesteuerte Rechenwerk RE die entsprechende Transformationsvorschrift des aktuellen Bearbeitungszustands so festlegt, daß der Fuzzy-Automat FA in den nächsthöheren Bearbeitungszustand Zk+1 übergeht. Die entsprechende Transformationsvorschrift des nächsthöheren Bearbeitungszustands wird so festlegt, daß der Fuzzy-Automat FA im nächsthöheren Bearbeitungszustand verbleibt und die entsprechende Transformationsvorschrift des zweithöheren Bearbeitungszustands wird so festlegt, daß der Fuzzy-Automat FA in den nächsthöheren Bearbeitungszustand zurückspringt. Zur Festlegung weiterer Transformationsvorschriften wird durch das programmgesteuerte Rechenwerk RE der nächsthöhere Bearbeitungszustand des Fuzzy-Automaten FA als neuer aktueller Bearbeitungszustand verwendet.

Auf das in der Figur 7a dargestellte Beispiel bezogen, befindet sich der Fuzzy-Automat FA zunächst im Bearbeitungszustand Z1. Bei Erkennung des ersten ausgewählten Punkts K1 im Feld f3/f3' im zu analysierenden Meßsignal durch das programmgesteuerte Rechenwerk RE soll ein Wechsel des Bearbeitungszustandes des Fuzzy-Automaten FA in den nächsthöheren Bearbeitungszustand Z2 erfolgen. Die Transformationsvorschrift im Feld f3/f3' des ersten Bearbeitungszustands Z1 bewirkt deshalb mittels der Übergangsregel A1 den Übergang des Fuzzy-Automaten FA in den nächsthöheren, zweiten Bearbeitungszustand Z2. Im nächsthöheren, zweiten Bearbeitungszustand Z2 bewirkt die Transformationsvorschrift im Feld f3/f3' mittels der Halteregel B2 den Verbleib des Fuzzy-Automaten FA in diesem nächsthöheren, zweiten Bearbeitungszustand Z2. Im zweithöheren, dritten Bearbeitungszustand Z3 bewirkt die Transformationsvorschrift im Feld f3/f3' mittels der Rücksprungregel C3 den Rücksprung des Fuzzy-Automaten FA in den zweiten Bearbeitungszustand Z2.

Falls in einem entlang des Verlaufs des Mustersignals T bestimmten Merkmalsbereich M11..M65 der letzte ausgewählte Punkt K7 liegt, wird durch das programmgesteuerte Rechenwerk RE die entsprechende Transformationsvorschrift A7 des aktuellen Bearbeitungszustands Z7 so festlegt, daß der Fuzzy-Automat FA in den nächsthöheren Bearbeitungszustand Z8 übergeht. Sämtliche Transformationsvorschriften des nächsthöheren Bearbeitungszustands Z8 sind mittels Rücksetzregeln D8 insbesondere bereits so festlegt, daß der Fuzzy-Automat FA in den ersten Bearbeitungszustand Z1 zurückspringt.

Falls in einem entlang des Verlaufs des Mustersignals T bestimmten Merkmalsbereich M11..M65 kein ausgewählter Punkt K1..K7 liegt, wird durch das programmgesteuerte Rechenwerk RE die entsprechende Transformationsvorschrift des aktuellen Bearbeitungszustands so festlegt, daß der Fuzzy-Automat im aktuellen Bearbeitungszustand verbleibt. Die entsprechende Transformationsvorschrift des nächsthöheren Bearbeitungszustands wird so festlegt, daß der Fuzzy-Automat in den aktuellen Bearbeitungszustand zurückspringt.

Im Beispiel der Figur 7c schneidet der Verlauf des Mustersignals T im dritten Bearbeitungszustand Z3 einen durch das Feld f4/f4' repräsentierten Merkmalsbereich, ohne daß dort ein ausgewählter Punkt K1..K7 des Mustersignals T liegt. Die Transformationsvorschrift im Feld f4/f4' des dritten Bearbeitungszustands Z3 bewirkt deshalb mittels der Halteregel B3 den Verbleib des Fuzzy-Automaten FA im aktuellen, dritten Bearbeitungszustand Z3. Im nächsthöheren, vierten Bearbeitungszustand Z4 bewirkt die Transformationsvorschrift im Feld f4/f4' mittels der Rücksprungregel C4 den Rücksprung des Fuzzy-Automaten FA in den dritten Bearbeitungszustand Z3.

Vorteilhaft werden durch das programmgesteuerte Rechenwerk RE für den Fall, daß in der von dem Mustersignal T durchlaufenen Folge der Merkmalsbereiche M11..M65 im Eingangswertebereich M zwei aufeinanderfolgende Merkmalsbereiche M11..M65 diagonal zueinander angeordnet sind, zumindest die entsprechenden Transformationsvorschriften der diesbezüglich dazwischen und davon seitlich liegenden Merkmalsbereiche M11..M65 im aktuellen Bearbeitungszustand so festlegt, daß der Fuzzy-Automat FA in diesem verbleibt. Dies sind insbesondere die Merkmalsbereiche M11..M65, welche im Bereich eines Rechtecks liegen, welches durch die zwei aufeinanderfolgenden, diagonal zueinander angeordneten Merkmalsbereiche M11..M65 als Eckbereiche aufgespannt wird. Im nächsthöheren Bearbeitungszustand werden die entsprechenden Transformationsvorschriften so festlegt, daß der Fuzzy-Automat in den aktuellen Bearbeitungszustand zurückspringt.

Im Beispiel der Figur 7c liegen die Felder f4/f4' und f5/f3' diagonal zueinander, wobei durch die Transformationsvorschrift im Feld f5/f3' der Übergang des Fuzzy-Automaten FA in den nächstöheren, vierten Bearbeitungszustand Z4 bewirkt wird. Die Transformationsvorschriften der diesbezüglich dazwischen und davon seitlich liegenden Felder f4/f3' und f5/f4' bewirken mittels der Halteregeln B3 den Verbleib des Fuzzy-Automaten FA im aktuellen, dritten Bearbeitungszustand.

In einer vorteilhaften Ausführungsform des erfindungsgemäßen Verfahrens wird dieses bei einer Einrichtung zur Durchbruch-Früherkennung bei Stranggußanlagen verwendet. Dabei weist das Mustersignal T zumindest den Verlauf eines zum Durchbruch des Gußstrangs führenden Temperatursignals auf. Das zu analysierende Meßsignal u(t), u'(t) weist dabei zumindest den Ist-Wert der Temperatur des Gußstrangs auf.

Vorteil des Verfahrens zur Parametrierung eines zum Vergleich eines Meßsignals mit einem Mustersignal dienenden Fuzzy-Automaten mittels eines programmgesteuerten Rechenwerks ist es, daß die Erstellung von Transformationsvorschriften zur Parametrierung des Fuzzy-Automaten vollautomatisch durch das Rechenwerk erfolgt. Auch bei häufig wechselnden Mustersignalen kann somit eine schnelle, unkomplizierte und flexible Umparametrierung des Fuzzy-Automaten erfolgen.

## Patentansprüche

1. Verfahren zur Parametrierung (PA) eines zum Vergleich eines Meßsignals (u(t), u'(t)) mit einem Mustersignal (T, f, f') dienenden Fuzzy-Automaten (FA) mittels eines programmgesteuerten Rechenwerks (RE), welches
a) Punkte (K1..K7) im Verlauf des Mustersignals (T, f, f') auswählt,
b) das Mustersignal (T, f, f') in einen Eingangswertebereich (M) des Fuzzy-Automaten (FA) abbildet,
c) Merkmalsbereiche (M11..M65) im Eingangswertebereich (M) derart generiert, daß in diesen zumindest die ausgewählten Punkte (K1..K7) liegen,
d) jedem ausgewählten Punkt (K1..K7) einen Bearbeitungszustand (Z1..Zn) des Fuzzy-Automaten (FA) zuordnet, so daß dieser mittels einer dadurch gebildeten Folge der Bearbeitungszustände (Z1..Zn) ein Maß dafür bestimmt, daß das Meßsignal (u(t), u'(t)) einen entsprechenden Verlauf wie das Mustersignal (T, f, f') aufweist,
e) zur Parametrierung (PA) des Fuzzy-Automaten (FA) jedem Bearbeitungszustand (Z1..Zn) jeweils für jeden Merkmalsbereich (M11..M65) des Eingangswertebereiches (M) eine Transformationsvorschrift (Z1..Z8, f1..f6, f1'..f5', A1..An-1, B2..Bn-1, C3..Cn-1, D1..Dn) zuordnet, welche der Fuzzy-Automat (FA) abhängig von dessen aktuellen Bearbeitungszustand (Z1..Zn) beim Durchlauf des zu analysierenden Meßsignals (u(t), u'(t)) durch einen Merkmalsbereich (M11..M65) zum Übergang in einen folgenden Bearbeitungszustand (Z1..Zn) ausführt.

2. Verfahren nach Anspruch 1, wobei ausgehend von einem ersten Bearbeitungszustand (Z1) des Fuzzy-Automaten (FA) das programmgesteuerte Rechenwerk (RE) entlang des Verlaufs des Mustersignals (T, f, f') die Folge der Merkmalsbereiche (M11..M65) bestimmt, die von dem Mustersignal (T, f, f') durchlaufen werden, und hieraus
a) die Merkmalsbereiche (M23, M32, M33, M34, M53) auswählt, in denen ein ausgewählter Punkt (K1..K7) des Mustersignals (T, f, f') liegt, und
b) den Merkmalsbereich (M33) auswählt, in dem der letzte ausgewählte Punkt (K7) des Mustersignals (T, f, f') liegt.

3. Verfahren nach Anspruch 2, wobei das programmgesteuerte Rechenwerk (RE) die Transformationsvorschriften (Z1..Z8, f1..f6, f1'..f5', A1..An-1, B2..Bn-1, C3..Cn-1, D1..Dn) der Bearbeitungszustände (Z1..Zn) zunächst so festlegt, daß der Fuzzy-Automat (FA) in den ersten Bearbeitungszustand (Z1) zurückspringt.

4. Verfahren nach Anspruch 3, wobei für den Fall, daß in einem ausgewählten Merkmalsbereich (M23, M32, M33, M34, M53) ein ausgewählter Punkt (K1..K7) des Mustersignals (T, f, f') liegt, das programmgesteuerte Rechenwerk (RE)
a) die entsprechende Transformationsvorschrift (Z1..Z8, f1..f6, fl'..f5', A1..An-1, B2..Bn-1, C3..Cn-1, D1..Dn) des aktuellen Bearbeitungszustands (Zk) so festlegt, daß der Fuzzy-Automat (FA) in den nächsthöheren Bearbeitungszustand (Zk+1) übergeht,
b) die entsprechende Transformationsvorschrift (Z1..Z8, f1..f6, f1'..f5', A1..An-1, B2..Bn-1, C3..Cn-1, D1..Dn) des nächsthöheren Bearbeitungszustands (Zk+1) so festlegt, daß der Fuzzy-Automat (FA) im nächsthöheren Bearbeitungszustand (Zk+1) verbleibt,
c) die entsprechende Transformationsvorschrift (Z1..Z8, f1..f6, f1'..f5', A1..An-1, B2..Bn-1, C3..Cn-1, D1..Dn) des zweithöheren Bearbeitungszustands (Zk+2) so festlegt, daß der Fuzzy-Automat (FA) in den nächsthöheren Bearbeitungszustand (Zk+1) zurückspringt, und
d) zur Festlegung weiterer Transformationsvorschriften (Z1..Z8, f1..f6, f1'..f5', A1..An-1, B2..Bn-1, C3..Cn-1, Dl..Dn) den nächsthöheren Bearbeitungszustand (Zk+1) des Fuzzy-Automaten (FA) als neuen aktuellen Bearbeitungszustand verwendet.

5. Verfahren nach einem der Ansprüche 3 oder 4, wobei für den Fall, daß in einem ausgewählten Merkmalsbereich (M33) der letzte ausgewählte Punkt (K7) des Mustersignals (T, f, f') liegt, das programmgesteuerte Rechenwerk (RE)
a) die entsprechende Transformationsvorschrift (Z7, f1..f6, f1'..f5', A7, B7, C7, D7) des aktuellen Bearbeitungszustands (Z7) so festlegt, daß der Fuzzy-Automat (FA) in den nächsthöheren Bearbeitungszustand (Z8) übergeht, und
b) sämtliche Transformationsvorschriften (Z8, f1..f6, f1'..f5', D8) des nächsthöheren Bearbeitungszustands (Z8) so festlegt, daß der Fuzzy-Automat (FA) in den ersten Bearbeitungszustand (Z1) zurückspringt.

6. Verfahren nach einem der Ansprüche 3 bis 5, wobei für den Fall, daß in einem ausgewählten Merkmalsbereich (M22, M24, M42, M44) kein ausgewählter Punkt (K1..K7) des Mustersignals (T, f, f') liegt, das programmgesteuerte Rechenwerk (RE)
a) die entsprechende Transformationsvorschrift (Z1..Z8, f1..f6, f1'..f5', A1..An-1, B2..Bn-1, C3..Cn-1, D1..Dn) des aktuellen Bearbeitungszustands (Zk) so festlegt, daß der Fuzzy-Automat (FA) im aktuellen Bearbeitungszustand (Zk) verbleibt, und
b) die entsprechende Transformationsvorschrift (Z1..Z8, f1..f6, f1'..f5', A1..An-1, B2..Bn-1, C3..Cn-1, D1..Dn) des nächsthöheren Bearbeitungszustands (Zk+1) so festlegt, daß der Fuzzy-Automat (FA) in den aktuellen Bearbeitungszustand (Zk) zurückspringt.

7. Verfahren nach einem der Ansprüche 3 bis 6, wobei für den Fall, daß in der von dem Mustersignal (T, f, f') durchlaufenen Folge der Merkmalsbereiche (M11..M65) zwei aufeinanderfolgende Merkmalsbereiche (M11..M65) im Eingangswertebereich (M) diagonal zueinander angeordnet sind, das programmgesteuerte Rechenwerk (RE) zumindest die entsprechenden Transformationsvorschriften (Z1..Z8, f1..f6, f1'..f5', A1..An-1, B2..Bn-1, C3..Cn-1, D1..Dn) der diesbezüglich im Eingangswertebereich (M) dazwischen und seitlich liegenden Merkmalsbereiche (M11..M65)
a) im aktuellen Bearbeitungszustand (Zk) so festlegt, daß der Fuzzy-Automat (FA) im aktuellen Bearbeitungszustand (Zk) verbleibt, und
b) im nächsthöheren Bearbeitungszustand (Zk+1) so festlegt, daß der Fuzzy-Automat (FA) in den aktuellen Bearbeitungszustand (Zk) zurückspringt.

8. Verfahren nach einem der vorangegangenen Ansprüche, wobei das programmgesteuerte Rechenwerk (RE) den Merkmalsbereichen (M11..M65) im Eingangswertebereich (M) Zugehörigkeitsfunktionen (f1..f6, f1'..f5') des Fuzzy-Automaten (FA) zuordnet.

9. Verfahren nach einem der vorangegangenen Ansprüche, wobei das Mustersignal (T, f, f') einen Signalverlauf (f) und wenigstens eine mathematische Ableitung (f') des Signalverlaufs (f), insbesondere nach der Zeit, aufweist.

10. Verfahren nach einem der vorangegangenen Ansprüche, wobei das programmgesteuerte Rechenwerk (RE) die ausgewählten Punkte (K1..K7) derartig bestimmt, daß diese für den Verlauf des Mustersignals (T, f, f') kennzeichnend sind.

11. Verwendung des Verfahrens nach einem der vorangegangenen Ansprüche bei einer Einrichtung zur Durchbruch-Früherkennung bei Stranggußanlagen, wobei
a) das Mustersignal (T, f, f') zumindest den zeitlichen Verlauf eines zum Durchbruch des Gußstrangs führenden Temperatursignals aufweist, und
b) das Meßsignal (u(t), u'(t)) zumindest den Ist-Wert der Temperatur des Gußstrangs aufweist.

## Claims

1. Method for configuring (PA) a fuzzy automatic-control device (FA) which is used for comparing a measurement signal (u(t), u'(t)) with a pattern signal (T, f, f') by means of a programmable arithmetic and logic unit (RE) which
a) selects points (K1..K7) in the profile of the pattern signal (T, f, f'),
b) images the pattern signal (T, f, f') into an input value range (M) of the fuzzy automatic-control device (FA),
c) generates feature ranges ((M11..M65) in the input value range (M) in such a manner that at least the selected points (K1..K7) are located in these feature regions,
d) assigns a processing state (Z1..Zn) of the fuzzy automatic-control device (FA) to each selected point (K1..K7), such that the fuzzy automatic-control device (FA) uses a sequence, formed in this way, of processing states (Z1..Zn) to define a measure that the measurement signal (u(t), u'(t)) has a profile corresponding to that of the pattern signal (T, f, f'),
e) for configuring (PA) the fuzzy automatic-control device (FA), a transformation criterion (Z1..Z8, f1..f6, f1'..f5', A1..An-1, B2..Bn-1, C3..Cn-1, D1..Dn) is in each case assigned to each processing state (Z1..Zn) for each feature range (M11..M65) of the input value range (M), which transformation criterion the fuzzy automatic-control device (FA) executes as a function of its current processing state (Z1..Zn) when the measurement signal (u(t), u'(t)) to be analysed passes through a feature range (M11..M65) in order to change to a subsequent processing state (Z1..Zn).

2. Method according to Claim 1, wherein, starting from a first processing state (Z1) of the fuzzy automatic-control device (FA), the programmable arithmetic and logic unit (RE) defines, along the profile of the pattern signal (T, f, f') the sequence of feature ranges (M11..M65) which the pattern signal (T, f, f') passes through and, from this,
a) selects the feature ranges (M23, M32, M33, M34, M53) in which a selected point (K1..K7) of the pattern signal (T, f, f') is located, and
b) selects the feature range (M33) in which the last selected point (K7) of the pattern signal (T, f, f') is located.

3. Method according to Claim 2, wherein the programmable arithmetic and logic unit (RE) initially defines the transformation criteria (Z1..Z8, f1..f6, f1'..f5', A1..An-1, B2..Bn-1, C3..Cn-1, D1..Dn) for the processing states (Z1..Zn) such that the fuzzy automatic-control device (FA) jumps back to the first processing state (Z1).

4. Method according to Claim 3, wherein, in the situation when a selected point (K1..K7) of the pattern signal (T, f, f') is located in a selected feature range (M23, M32, M33, M34, M53), the programmable arithmetic and logic unit (RE)
a) defines the corresponding transformation criterion (Z1..Z8, f1..f6, f1'..f5', A1..An-1, B2..Bn-1, C3..Cn-1, D1..Dn) of the current processing state (Zk) such that the fuzzy automatic-control device (FA) changes to the next-higher processing state (Zk+1),
b) defines the corresponding transformation criterion (Z1..Z8, f1..f6, f1'..f5', A1..An-1, B2..Bn-1, C3..Cn-1, D1..Dn) of the next-higher processing state (Zk+1) such that the fuzzy automatic-control device (FA) remains in the next-higher processing state (Zk+1),
c) defines the corresponding transformation criterion (Z1..Z8, f1..f6, f1'..f5', A1..An-1, B2..Bn-1, C3..Cn-1, D1..Dn) of the next but one processing state (Zk+2) such that the fuzzy automatic-control device (FA) jumps back to the next-higher processing state (Zk+1), and
d) uses the next-higher processing state (Zk+1) of the fuzzy automatic-control device (FA) as the new current processing state for defining further transformation criteria (Z1..Z8, f1..f6, f1'..f5', A1..An-1, B2..Bn-1, C3..Cn-1, D1..Dn).

5. Method according to one of Claims 3 or 4, wherein, in the situation when the last selected point (K7) of the pattern signal (T, f, f') is located in a selected feature range (M33), the programmable arithmetic and logic unit (RE)
a) defines the corresponding transformation criterion (Z7, f1..f6, f1'..f5', A7, B7, C7, D7) for the current processing state (Z7) such that the fuzzy automatic-control device (FA) changes to the next-higher processing state (Z8), and
b) defines all the transformation criteria (Z8, f1..f6, f1'..f5', D8) for the next-higher processing state (Z8) such that the fuzzy automatic-control device (FA) jumps back to the first processing state (Z1).

6. Method according to one of Claims 3 to 5, wherein, in the case when no selected point (K1..K7) of the pattern signal (T, f, f') is located in a selected feature range (M22, M24, M42, M44), the programmable arithmetic and logic unit (RE)
a) defines the corresponding transformation criterion (Z1..Z8, f1..f6, f1'..f5', A1..An-1, B2..Bn-1, C3..Cn-1, D1..Dn) for the current processing state (Zk) such that the fuzzy automatic-control device (FA) remains in the current processing state (Zk), and
b) defines the corresponding transformation criterion (Z1..Z8, f1..f6, f1'..f5', A1..An-1, B2..Bn-1, C3..Cn-1, D1..Dn) for the next-higher processing state (Zk+1) such that the fuzzy automatic-control device (FA) jumps back to the current processing state (Zk).

7. Method according to one of Claims 3 to 6, wherein, in the situation when two successive feature ranges (M11..M65) are arranged diagonally with respect to one another in the sequence of the feature ranges (M11..M65) through which the pattern signal (T, f, f') passes in the input value range (M), the programmable arithmetic and logic unit (RE) at least defines the corresponding transformation criteria (Z1..Z8, f1..f6, f1'..f5', A1..An-1, B2..Bn-1, C3..Cn-1, D1..Dn) of those feature ranges (M11..M65) which are located in between these ranges in the input value range (M) and at the side
a) in the current processing state (Zk) such that the fuzzy automatic-control device (FA) remains in the current processing state (Zk), and
b) in the next-higher processing state (Zk+1) such that the fuzzy automatic-control device (FA) jumps back to the current processing state (Zk).

8. Method according to one of the preceding claims, wherein the programmable arithmetic and logic unit (RE) assigns the feature ranges (M11..M65) in the input value range (M) association functions (f1..f6, f1'..f5') of the fuzzy automatic-control device (FA).

9. Method according to one of the preceding claims, wherein the pattern signal (T, f, f') has a signal profile (f) and at least one mathematical derivative (f') of the signal profile (f), in particular a time derivative.

10. Method according to one of the preceding claims, wherein the programmable arithmetic and logic unit (RE) defines the selected points (K1..K7) in such a manner that they are characteristic of the profile of the pattern signal (T, f, f').

11. Use of the method according to one of the preceding claims in a device for early break-out recognition in continuous casting plants, wherein
a) the pattern signal (T, f, f') includes at least the time profile of a temperature signal which leads to break-out of the cast strand, and
b) the measurement signal (u(t), u'(t)) includes at least the actual value of the temperature of the cast strand.

## Revendications

1. Procédé pour le paramétrage (PA) d'un automate à logique floue (FA) servant à comparer un signal de mesure (u(t), u'(t)) à un signal modèle (T, f, f'), au moyen d'une unité de calcul commandée par programme (RE) qui
a) sélectionne des points (K1 à K7) dans la courbe du signal modèle (T, f, f'),
b) reproduit le signal modèle (T, f, f') dans une zone de valeurs d'entrée (M) de l'automate à logique floue (FA),
c) génère des zones caractéristiques (M11 à M65) dans la zone de valeurs d'entrée (M) de telle sorte qu'au moins les points sélectionnés (K1 à K7) se trouvent dans celles-ci,
d) associe à chaque point sélectionné (K1 à K7) un état de traitement (Z1 à Zn) de l'automate à logique floue (FA) de telle sorte que celui-ci détermine au moyen d'une séquence ainsi formée des états de traitement (Z1 à Zn) une mesure pour le fait que le signal de mesure (u(t), u'(t)) a une allure correspondante comme le signal modèle (T, f, f'),
e) pour le paramétrage (PA) de l'automate à logique floue (FA), associe à chaque état de traitement (Z1 à Zn) pour chaque zone caractéristique (M11 à M65) de la zone de valeurs d'entrée (M) une règle de transformation (Z1 à Z8, f1 à f6, f1' à f5', A1 à An-1, B2 à Bn-1, C3 à Cn-1, D1 à Dn) que l'automate à logique floue (FA) exécute en fonction de son état actuel de traitement (Z1 à Zn) pour la transition dans un état de traitement suivant (Z1 à Zn) lors du passage du signal de mesure à analyser (u(t), u'(t)) par une zone caractéristique (M11 à M65).

2. Procédé selon la revendication 1, dans lequel, à partir d'un premier état de traitement (Z1) de l'automate à logique floue (FA), l'unité de calcul commandée par programme (RE) détermine le long de la courbe du signal modèle (T, f, f') la séquence des zones caractéristiques (M11 à M65) qui sont traversées par le signal modèle (T, f, f') et
a) sélectionne à partir de là les zones caractéristiques (M23, M32, M33, M34, M53) dans lesquelles se trouve un point sélectionné (K1 à K7) du signal modèle (T, f, f'), et
b) sélectionne à partir de là la zone caractéristique (M33) dans laquelle se trouve le dernier point sélectionné (K7) du signal modèle (T, f, f').

3. Procédé selon la revendication 2, dans lequel l'unité de calcul commandée par programme (RE) fixe d'abord les règles de transformation (Z1 à Z8, f1 à f6, f1' à f5', A1 à An-1, B2 à Bn-1, C3 à Cn-1, D1 à Dn) des états de traitement (Z1 à Zn) de telle sorte que l'automate à logique floue (FA) revient dans le premier état de traitement (Z1).

4. Procédé selon la revendication 3, dans lequel, pour le cas où un point sélectionné (K1 à K7) du signal modèle (T, f, f') se trouve dans une zone caractéristique sélectionnée (M23, M32, M33, M34, M53), l'unité de calcul commandée par programme (RE)
a) fixe la règle de transformation correspondante (Z1 à Z8, f1 à f6, f1' à f5', A1 à An-1, B2 à Bn-1, C3 à Cn-1, D1 à Dn) de l'état de traitement actuel (Zk) de telle sorte que l'automate à logique floue (FA) passe dans l'état de traitement immédiatement supérieur (Zk+1),
b) fixe la règle de transformation correspondante (Z1 à Z8, f1 à f6, f1' à f5', A1 à An-1, B2 à Bn-1, C3 à Cn-1, D1 à Dn) de l'état de traitement immédiatement supérieur (Zk+1) de telle sorte que l'automate à logique floue (FA) reste dans l'état de traitement immédiatement supérieur (Zk+1),
c) fixe la règle de transformation correspondante (Z1 à Z8, f1 à f6, f1' à f5', A1 à An-1, B2 à Bn-1, C3 à Cn-1, D1 à Dn) de l'état de traitement supérieur à celui immédiatement supérieur (Zk+2) de telle sorte que l'automate à logique floue (FA) revient dans l'état de traitement immédiatement supérieur (Zk+1), et
d) pour fixer d'autres règles de transformation (Z1 à Z8, f1 à f6, f1' à f5', A1 à An-1, B2 à Bn-1, C3 à Cn-1, D1 à Dn), utilise l'état de traitement immédiatement supérieur (Zk+1) de l'automate à logique floue (FA) comme nouvel état de traitement actuel.

5. Procédé selon l'une des revendications 3 ou 4, dans lequel, pour le cas où le dernier point sélectionné (K7) du signal modèle (T, f, f') se trouve dans une zone caractéristique sélectionnée (M33), l'unité de calcul commandée par programme (RE)
a) fixe la règle de transformation correspondante (Z7, f1 à f6, f1' à f5', A7, B7, C7, D7) de l'état de traitement actuel (Z7) de telle sorte que l'automate à logique floue (FA) passe dans l'état de traitement immédiatement supérieur (Z8), et
b) fixe toutes les autres règles de transformation (Z8, f1 à f6, f1' à f5', D8) de l'état de traitement immédiatement supérieur (Z8) de telle sorte que l'automate à logique floue (FA) revient dans le premier état de traitement (Z1).

6. Procédé selon l'une des revendications 3 à 5, dans lequel, pour le cas où aucun point sélectionné (K1 à K7) du signal modèle (T, f, f') ne se trouve dans une zone caractéristique sélectionnée (M22, M24, M42, M44), l'unité de calcul commandée par programme (RE)
a) fixe la règle de transformation correspondante (Z1 à Z8, f1 à f6, f1' à f5', A1 à An-1, B2 à Bn-1, C3 à Cn-1, D1 à Dn) de l'état de traitement actuel (Zk) de telle sorte que l'automate à logique floue (FA) reste dans l'état de traitement actuel (Zk), et
b) fixe la règle de transformation correspondante (Z1 à Z8, f1 à f6, f1' à f5', A1 à An-1, B2 à Bn-1, C3 à Cn-1, D1 à Dn) de l'état de traitement immédiatement supérieur (Zk+1) de telle sorte que l'automate à logique floue (FA) revient dans l'état de traitement actuel (Zk).

7. Procédé selon l'une des revendications 3 à 6, dans lequel, pour le cas où, dans la séquence des zones caractéristiques (M11 à M65) qui est parcourue par le signal modèle (T, f, f'), deux zones caractéristiques successives (M11 à M65) sont disposées en diagonale l'une par rapport à l'autre dans la zone de valeurs d'entrée (M), l'unité de calcul commandée par programme (RE) fixe au moins les règles de transformation correspondantes (Z1 à Z8, f1 à f6, f1' à f5', A1 à An-1, B2 à Bn-1, C3 à Cn-1, D1 à Dn) des zones caractéristiques (M11 à M65) se trouvant entre et latéralement par rapport à celles-ci dans la zone de valeurs d'entrée (M)
a) dans l'état de traitement actuel (Zk) de telle sorte que l'automate à logique floue (FA) reste dans l'état de traitement actuel (Zk), et
b) dans l'état de traitement immédiatement supérieur (Zk+1) de telle sorte que l'automate à logique floue (FA) revient dans l'état de traitement actuel (Zk).

8. Procédé selon l'une des revendications précédentes, dans lequel l'unité de calcul commandée par programme (RE) associe aux zones caractéristiques (M11 à M65) dans la zone de valeurs d'entrée (M) des fonctions d'appartenance (f1 à f6, f1' à f5') de l'automate à logique floue (FA).

9. Procédé selon l'une des revendications précédentes, dans lequel le signal modèle (T, f, f') présente une courbe de signal (f) et au moins une dérivée mathématique (f') de la courbe de signal (f), notamment en fonction du temps.

10. Procédé selon l'une des revendications précédentes, dans lequel l'unité de calcul commandée par programme (RE) détermine les points sélectionnés (K1 à K7) de telle sorte que ceux-ci sont caractéristiques de la courbe du signal modèle (T, f, f').

11. Utilisation du procédé selon l'une des revendications précédentes dans un dispositif pour la détection précoce de ruptures dans des installations de coulée continue,
a) le signal modèle (T, f, f') comportant au moins la courbe temporelle d'un signal de température conduisant à la rupture de la coulée continue, et
b) le signal de mesure (u(t), u'(t)) comportant au moins la valeur réelle de la température de la coulée continue.
